# EUROPEAN PATENT SPECIFICATION

(11) **EP 1 501 636 B1**
(45) Date of publication and mention of the grant of the patent: **30.08.2006**
(21) Application number: 03721167.9
(22) Date of filing: 01.05.2003
(51) Int. Cl.: B04C 3/00, B04C 3/04

(54) **DEVICE AND METHOD FOR SEPARATING A MIXTURE**
VORRICHTUNG UND VERFAHREN ZUR TRENNUNG EINES GEMISCHES
PROCEDE ET DISPOSITIF POUR SEPARER UN MELANGE

(30) Priority: 03.05.2002 NL 1020531
(43) Date of publication of application: 02.02.2005
(73) Proprietor: Spark Technologies and Innovations N.V., Willemstad, Curaçao (AN); Koch-Glitsch N.V., Willemstad, Curaçao (AN)
(72) Inventor: SCHOOK, Robert, NL-6922 EC Duiven (NL)
(74) Representative: Hylarides, Paul Jacques
(86) International application number: PCT/NL2003/000318
(87) International publication number: WO 2003/092901

(56) References cited:
- WO-A-00/25931
- WO-A-00/74815
- DE-B- 1 938 695
- GB-A- 851 498
- US-A- 3 616 619

## Description

The present invention relates to a device and system for separating a mixture.

Many types of separating device are known for separating gas/liquid mixtures, for instance in order to dry natural gas. In a so-called axial cyclone the entering gas/liquid mixture is set into a rotating movement, whereby a heavy fraction (in the order of magnitude of up to 45% of the total flow) in which a relatively large amount of liquid is present, is flung against the outer wall of the cyclone, while a relatively light fraction remains flowing further in or close to the centre of the cyclone. In so-called axial recycle cyclones a part of the heavy fraction that has been set into rotation is discharged, wherein a part of this discharged fraction is reintroduced into the flow in order to also further separate this part of the heavy fraction into a heavy and light fraction. Recycling of a part of the heavy fraction has the purpose, among others, of increasing the separating efficiency of the cyclone.

From the Netherlands patent NL 101478 of applicant is known an axial recycle cyclone consisting of a tube which has on the underside an inlet for the gas/liquid mixture and on the upper side thereof an outlet opening. Placed roughly centrally in the space enclosed by the tube is a flow body which is provided with swirl blades or vanes for setting into rotating movement the gas/liquid mixture fed in via the inlet.

For structural reasons the swirl blades of the known cyclones are herein mounted perpendicularly of the flow body.

Although the mixture flowing along the thus mounted swirl blades is set into rotation, the flowing mixture has no natural flow profile. This has negative consequences for the separating efficiency of the cyclone. A further drawback is that, given determined separating conditions, the pressure drop over the cyclone is relatively large. This means a limitation in the capacity of the cyclone.

Known from the British patent specification GB 851 498 A is a separating device in which helical vanes are arranged in an oblique position on a central flow body so as to set into rotation a mixture flowing along the flow body. The swirl blades are however straight in outward (radial) direction, which has an adverse effect on the flow.

From the American patent specification US 3 616 619 is known a separating device in which a number of helical swirl blades are arranged on a central flow body. However, the applied swirl blades appear to have an outward (radial) fixed curvature. Such swirl blades also result in an inadequate separation of the mixture.

It is an object of the present invention to provide an improved device and an improved system for separating a mixture in which at least the above stated drawbacks of the prior art are obviated.

This object is achieved according to the invention in a device for separating a mixture, comprising:
- a flow body along the outer surface of which the mixture for separating can be carried;
- at least one swirl blade arranged on the flow body for setting a mixture flowing therealong into a rotating movement from the proximal end to the distal end thereof, for the purpose of separating the mixture into a relatively heavy and a relatively light fraction, wherein the position of the swirl blade is substantially oblique relative to the perpendicular to the outer surface of the flow body and the swirl blade is outwardly curved,
and
wherein the outward curvature of the swirl blade and/or the position of the swirl blade varies at different positions between the proximal and distal end of the swirl blade.

By placing the curved swirl blade obliquely relative to the flow body in such a manner, a more natural flow profile of the mixture flowing along the swirl blades can be brought about. Depending on the situation, the curvature of the swirl blade or the position of the swirl blade, as seen from the proximal end in the direction of the distal end, can still be varied. The pressure drop over the swirl blades can be reduced by 30% or more while the separating efficiency remains constant. Downstream of the swirl blades there is further provided a more uniform flow with fewer swirls, which increases the separating efficiency of the device. The "slip" is hereby also minimized. "Slip" is here understood to mean the difference between the flow angle of the distal end of a swirl blade (the geometric angle between the end part of a swirl blade and the axial direction) and the effective flow angle in the separator itself (downstream of the relevant swirl blade). In the ideal case these angles are equal to each other. In practice there is a difference between the two angles. This difference is referred to as "slip".

According to a first preferred embodiment the swirl blade extends substantially obliquely relative to the flow body at the position of the connection of the swirl blade to the flow body. This means that the swirl blade connects obliquely onto the surface of the flow body. A more natural flow profile can be obtained by having the swirl blade connect obliquely to the flow body. The improvement already occurs if the angle (α) between the swirl blade and the perpendicular to the flow body surface amounts substantially to more than 5° at the position of the connection of the relevant swirl blade to the flow body. An even more natural profile is obtained when said angle (α) is substantially between 25° and 65°.

In the light of obtaining a more natural flow profile, it is however necessary to give the swirl blades a curved form in radial direction. This is understood to mean that there is more or less curvature from the connection of a swirl blade onto the flow body to the above mentioned free longitudinal edge of the swirl blade, wherein the angle (α) between the swirl blade and the perpendicular to the flow body surface preferably increases gradually towards the outside.

In order to set the mixture into rotation the swirl blades take a curved form in axial (longitudinal) direction or flow direction, wherein the curvature increases in axial or flow direction.

The separating device can be applied not only to separate gas/liquid mixtures as set forth above, but also to separate mixtures in general, such as for instance liquid/liquid mixtures and/or gas/solid mixtures.

The invention also relates to a separating system for separating a mixture, comprising:
- a tube which is provided with at least one inlet opening for infeed of the mixture for separating and at least one outlet opening for outfeed of the separated mixture;
- a flow body disposed in the tube, along the outer surface of which the mixture for separating can be carried;
- one or more swirl blades arranged on the outer surface of the flow body and/or the inner surface of the tube, along which blades a mixture flows from a proximal end to a distal end for the purpose of setting the mixture into a rotating movement so as separate the mixture into a relatively heavy and a relatively light fraction,
wherein the position of the swirl blade is substantially oblique relative to the perpendicular to the outer surface of the flow body and the swirl blade is curved outward,
and
wherein the outward curvature of the swirl blade and/or the position of the swirl blade varies at different positions between the proximal and distal end of the swirl blade.

The swirl blades can herein be fixed to the tube, to the flow body or to both the flow body and the tube. For an optimum separating efficiency a further preferred embodiment relating to an axial recycle cyclone comprises:
- one or more outflow openings arranged downstream relative to the swirl blades for the purpose of causing a part of the mixture to flow laterally out of the tube;
- a recycle conduit arranged in axial direction through the rotating means for carrying back into the tube the part of the mixture which has exited via the outflow openings.

Further advantages, features and details of the present invention will be elucidated on the basis of the description of a preferred embodiment thereof. Reference is made in the description to figures, in which:
Figure 1 shows a partly broken-away perspective view of a preferred embodiment of the system according to the invention;
Figure 2a shows a photo of a cross-sectional preferred embodiment of the device according to the invention;
Figure 2b shows a partly broken-away perspective view of the preferred embodiment of the device according to the invention shown in figure 1; and
Figures 3a-3b show schematic sections to illustrate the oblique position and the outward curvature of the swirl blades
Figures 3c-3f show schematic sections of a number of further preferred embodiments.

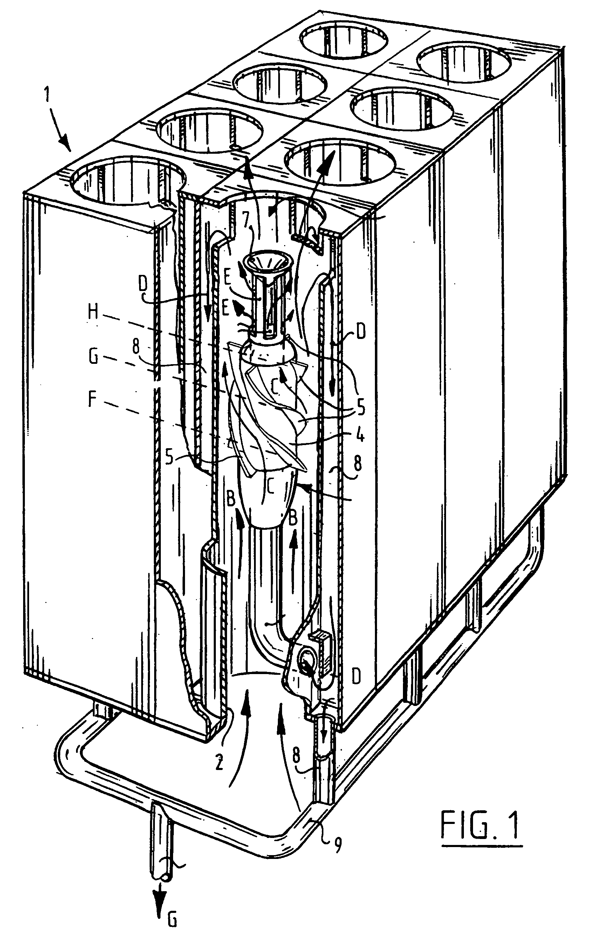

Separation vessels are known for separating gas/oil mixtures whereby the gas/liquid mixture fed under high pressure can be separated into a substantially gas-containing part and a substantially liquid-containing part (respectively the light and heavy fraction). After a first separation the mixture is guided along cyclone boxes arranged in the separation vessel. An example of such a cyclone box 1 is shown in figure 1.

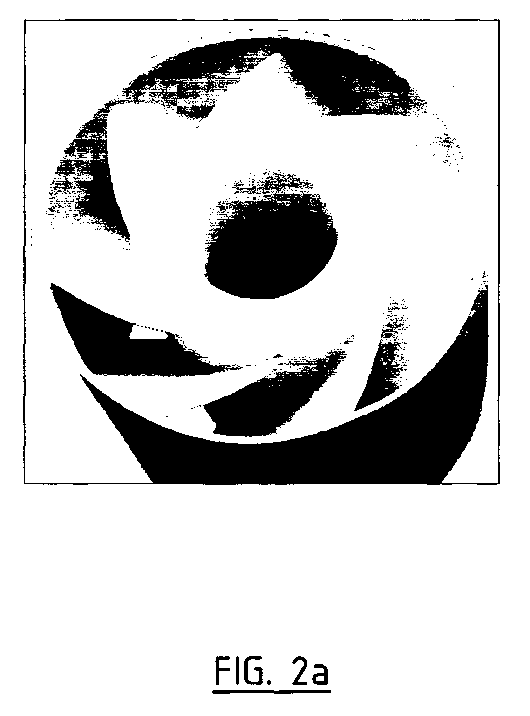

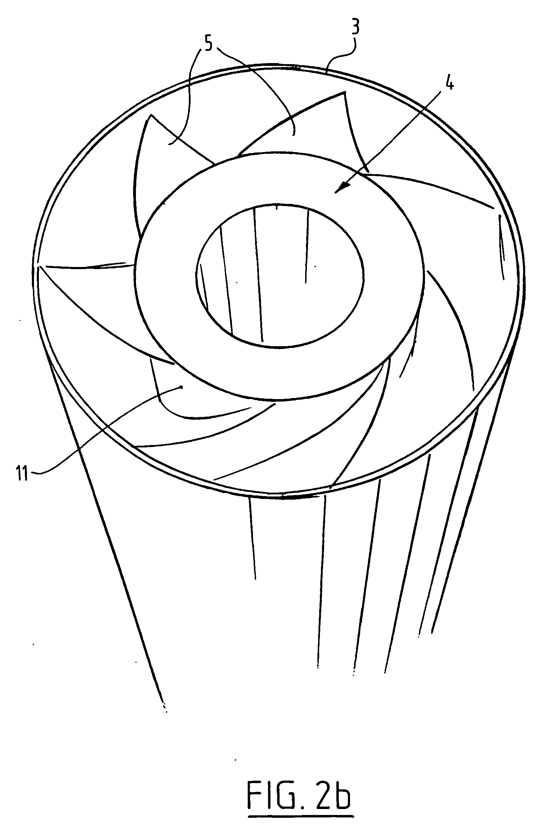

Cyclone box 1 consists of eight cyclones. The gas/liquid mixture is supplied from below and guided into each of the cyclone tubes 3 of cyclones 2 (arrows A). The gas/liquid mixture flows further upward in axial direction (arrows B) and arrives at a flow body 4 positioned in tube 3. Flow body 4 can take many forms. However, in order to reduce the pressure losses in tube 3, the outer surface of the flow body will in most cases be curved and have a form similar to the form shown in figure 2.

A number of swirl blades or vanes 5 is arranged against the outer surface of flow body 4. Swirl blades 5 set the mixture flowing therealong into rotation (the mixture herein acquires a tangential component of velocity), which is represented by arrows C. By setting the gas/liquid mixture into rotation a relatively heavy part of the fraction, which in this case signifies a part containing a relatively large quantity of liquid, will be flung outward under the influence of the occurring centrifugal forces and come to lie against the inside of wall 3, while a relatively light part, which in this case signifies the part containing a relatively large quantity of gas, continues to flow round and close to the centre of tube 2.

The light fraction exits on the upper side of tube 3 (arrow F) and subsequently discharged in a manner not shown. The heavy fraction flung outward by the rotating movements is partly discharged via openings 7 in tube 3 and enters a recycle conduit 8 (arrow D). Recycle conduit 8 extends through flow body 4 so that the relevant part of the heavy fraction is carried back into the tube again on the upper side of the flow body (arrow E). Further connected to recycle conduit 8 is a conduit 9 for discharge of the heavy fraction, which conduit debouches onto an annular conduit 10 onto which debouch the discharge conduits of the other cyclones (arrow G).

Although the separating system shown in figure 1 is a system in which so-called recycle cyclones are applied, the invention can however also be applied to other separating devices, for instance axial cyclones without recycling, cyclones for separating gas and solid particles, separating devices for two or more liquids (liquid/liquid separators) and so on.

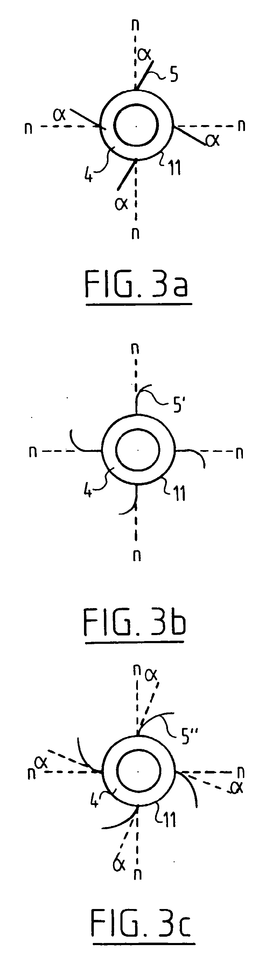

In figure 2 the preferred embodiment of the invention is shown in more detail. Figure 2 is a partly cut-away view in perspective of a flow body 4 which is placed in a tube 3. Swirl blades 5 are arranged obliquely on the outer surface 11 of flow body 3. This is made clearer in figure 3a which illustrates the oblique position of the swirl blades. The angle α between the perpendicular n to the outer surface 11 of the flow body and the lower part of the relevant swirl blade 5 amounts to less than 90°. In most cases the angle α will be between 25-65°. As a result of the oblique position of the swirl blades the mixture flowing therealong has a more natural flow profile, which ensures a better flow of the mixture along the blades.

Figure 3b illustrates the outward curvature of the swirl blades shows a cross-section of another preferred embodiment, in which the swirl blades 5' have a position in which they are placed in known manner perpendicularly to flow body 4, but in which the swirl blades are partly or wholly curved in outward or radial direction, i.e. from said connection to the flow body as far as the free longitudinal edge of the swirl blade in question. In the shown embodiment the swirl blade is not curved close to the end connecting to the flow body, while the swirl blade is curved close to the opposite end. It is likewise conceivable to have the curvature start immediately at the position of the connection to the flow body.

Figure 3c shows a cross-section of a preferred embodiment, in which swirl blades 5" not only have an oblique position (i.e. at the position of the connection) relative to the surface of flow body 4, but are also curved in outward (radial) direction.

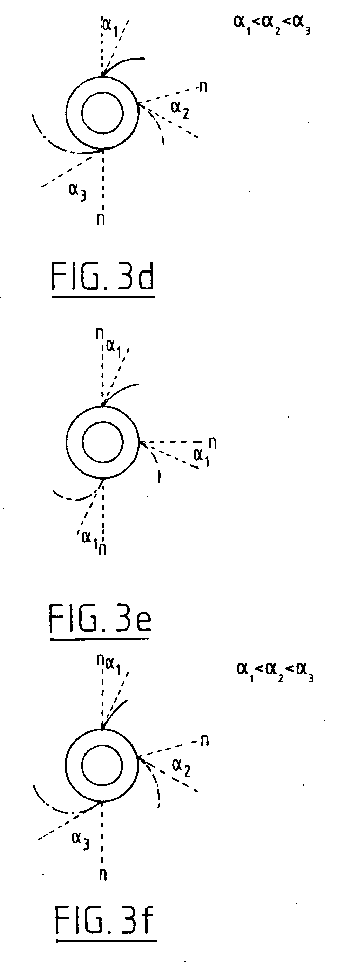

When a swirl blade is followed in the flow direction, it is found that the position of a swirl blade and/or the curvature of the swirl blade changes. This change is adjusted such that an optimal flow profile is created. Such a change is made apparent in the following figures 3e and 3f, in which a single swirl blade is shown at different positions (the other swirl blades are omitted for the sake of clarity of the description).

In a further advantageous preferred embodiment, the position of a swirl blade becomes increasingly more oblique from the upstream side (inflow side) to the downstream side of the flow body. The position of the swirl blade herein preferably progresses in constant manner. This is shown in figure 3d, in which the unbroken line shows swirl blade 5 in cross-section at a first position F, the dashed line shows the swirl blade in cross-section at a second position G and the dash-dot line shows the swirl blade in cross-section at a third, further advanced position H. It can be clearly seen that the position of the swirl blade along the flow body varies, i.e. from the upstream end to the downstream end.

In another advantageous preferred embodiment the curvature of a swirl blade varies as seen from the upstream end (inflow end) to the downstream end of the flow body. This is shown in figure 3e, in which the unbroken line shows swirl blade 5 in cross-section at a first position F, the dashed line shows swirl blade 5 in cross-section at a second position G and the dash-dot line shows the swirl blade in cross-section at a third, further advanced position H. It can be clearly seen that the curvature of the swirl blade at position F is less than at position B and the curvature at position G is in turn less than at position H. The curvature of a swirl blade (the other swirl blades are omitted for the sake of clarity in the figures) thus varies along the flow body, i.e. from the upstream end to the downstream end.

In a particularly advantageous embodiment of the invention, as shown in figure 3f, the position of the swirl blades varies as well as the curvature thereof.

As can be inferred from figure 1, the upstream part of a swirl blade, i.e. in figure 1 the lower part of swirl blade 12, is arranged axially, i.e. substantially parallel to the longitudinal axis of the flow body. This corresponds with a very large radius of curvature, for instance in the order of magnitude of more than 1 to 1.5 m. Further downstream herefrom the curvature of the swirl blades will increase gradually in order to set the mixture flowing therealong into gradual rotation. The radius of curvature at the downstream end of the swirl blades then decreases continuously to a value which can be as small as 5 cm.

The present invention is not limited to the above described preferred embodiment thereof; the rights sought are defined by the following claims, within the scope of which many modifications can be envisaged.

## Claims

1. Device for separating a mixture, comprising:
- a flow body (4) along the outer surface of which the mixture for separating can be carried;
- at least one swirl blade (5) arranged on the flow body (4) for setting a mixture flowing therealong into a rotating movement from the proximal end to the distal end thereof, for the purpose of separating the mixture into a relatively heavy and a relatively light fraction, **characterized in that** the orientation of the swirl blade is substantially oblique relative to the perpendicular to the outer surface (11) of the flow body (4) and the swirl blade (5) is curved in the radially outward direction,
and **in that**
the outward curvature of the swirl blade (5) and/or the orientation of the swirl blade (5) varies at different positions between the proximal and distal end of the swirl blade (5).

2. Device as claimed in claim 1, wherein the outward curvature increases from the proximal end to the distal end of the swirl blade.

3. Device as claimed in claim 2, wherein the curvature increases uniformly over at least a part of the swirl blade.

4. Device as claimed in any of the foregoing claims, wherein the orientation of the swirl blade varies from the proximal end to the distal end.

5. Device as claimed in claim 4, wherein the orientation of the swirl blade increases uniformly over at least a part of the swirl blade.

6. Device as claimed in claim 1, wherein the swirl blade extends substantially obliquely relative to the flow body at the position of the connection of the swirl blade to the flow body.

7. Device as claimed in claim 6, wherein the angle (α) between a swirl blade and the perpendicular to the flow body surface amounts substantially to more than 5 at the position of the connection of the swirl blade to the flow body.

8. Device as claimed in claim 1, wherein the angle (α) between the swirl blade and the perpendicular to the flow body surface amounts substantially to between 25° and 65° at the position of the connection of a swirl blade to the flow body.

9. Device as claimed in any of the foregoing claims, wherein the angle (α) between the swirl blade and the perpendicular to the flow body surface increases gradually towards the outside.

10. Device as claimed in any of the foregoing claims, wherein one or more of the swirl blades has an increasing axial curvature from the proximal end to the distal end.

11. Device as claimed in claim 10, wherein the swirl blade extends substantially axially over a part from the proximal end, and the remaining part has an increasing curvature up to the distal end.

12. Device as claimed in any of the claims 1-11, wherein the mixture for separating is a liquid/liquid mixture, a liquid/gas mixture and/or a gas/solid mixture.

13. Separating system for separating a mixture, comprising:
- a tube (3) which is provided with at least one inlet opening for infeed of the mixture for separating and at least one outlet opening for outfeed of the separated mixture;
- a flow body (4) disposed in the tube (3), along the outer surface of which the mixture for separating can be carried;
- one or more swirl blades (5) arranged on the outer surface (11) of the flow body (4) and/or the inner surface of the tube (3), along which blades a mixture flows from a proximal end to a distal end for the purpose of setting the mixture into a rotating movement so as separate the mixture into a relatively heavy and a relatively light fraction, **characterized in that**
the orientation of the swirl blade (5) is substantially oblique relative to the perpendicular to the outer surface of the flow body (4) and the swirl blade (5) is curved in the radially outward direction,
and **in that**
the outward curvature of the swirl blade (5) and/or the orientation of the swirl blade (5) varies at different positions between the proximal and distal end of the swirl blade (5).

14. Separating system as claimed in claim 13, comprising:
- one or more outflow openings arranged downstream relative to the swirl blades for the purpose of causing a part of the mixture to flow laterally out of the tube;
- a recycle conduit arranged in axial direction through the rotating means for carrying back into the tube the part of the mixture which has exited via the outflow openings.

15. Separating system as claimed in claims 12 and 13 with a device as claimed in any of the claims 1-11.

## Patentansprüche

1. Vorrichtung zum Trennen eines Gemisches, aufweisend:
- einen Strömungskörper (4), entlang dessen Außenfläche das Gemisch zum Trennen gefördert werden kann;
- wenigstens ein Wirbelblatt (5), das an dem Strömungskörper (4) zum Versetzen eines dort entlang strömenden Gemisches in eine Drehbewegung von dem proximalen Ende zu dem distalen Ende davon für den Zweck des Trennen des Gemisches in einen relativ schweren und einen relativ leichten Anteil angeordnet ist, **dadurch gekennzeichnet, dass** die Orientierung des Wirbelblattes im Wesentlichen schräg relativ zu der Senkrechten an der Außenfläche (11) des Strömungskörpers (4) ist und das Wirbelblatt (5) in der Richtung radial nach außen gewölbt ist, und dass die Wölbung des Wirbelblattes (5) nach außen und/oder die Orientierung des Wirbelblattes (5) an verschiedenen Stellen zwischen dem proximalen und distalen Ende des Wirbelblattes (5) variiert.

2. Vorrichtung nach Anspruch 1, wobei sich die Wölbung nach außen von dem proximalen Ende zu dem distalen Ende des Wirbelblattes erhöht.

3. Vorrichtung nach Anspruch 2, wobei sich die Wölbung über wenigstens einen Teil des Wirbelblattes gleichmäßig erhöht.

4. Vorrichtung nach einem der vorhergehenden Ansprüche, wobei die Orientierung des Wirbelblattes von dem proximalen Ende zu dem distalen Ende variiert.

5. Vorrichtung nach Anspruch 4, wobei sich die Orientierung des Wirbelblattes über wenigstens einen Teil des Wirbelblattes gleichmäßig erhöht.

6. Vorrichtung nach Anspruch 1, wobei sich das Wirbelblatt an der Stelle der Verbindung des Wirbelblattes mit dem Strömungskörper im Wesentlichen schräg relativ zu dem Strömungskörper erstreckt.

7. Vorrichtung nach Anspruch 6, wobei der Winkel (α) zwischen einem Wirbelblatt und der Senkrechten an der Strömungskörperfläche an der Stelle der Verbindung des Wirbelblattes mit dem Strömungskörper im Wesentlichen mehr als 5° beträgt.

8. Vorrichtung nach Anspruch 1, wobei der Winkel (α) zwischen dem Wirbelblatt und der Senkrechten an der Strömungskörperfläche an der Stelle der Verbindung eines Wirbelblattes mit dem Strömungskörper im Wesentlichen zwischen 25° und 65° beträgt.

9. Vorrichtung nach einem der vorhergehenden Ansprüche, wobei sich der Winkel (α) zwischen dem Wirbelblatt und der Senkrechten an der Strömungskörperfläche zu der Außenseite hin allmählich erhöht.

10. Vorrichtung nach einem der vorhergehenden Ansprüche, wobei eines oder mehrere der Wirbelblätter eine steigende axiale Wölbung von dem proximalen Ende zu dem distalen Ende aufweist.

11. Vorrichtung nach Anspruch 10, wobei sich das Wirbelblatt von dem proximalen Ende über einen Teil im Wesentlichen axial erstreckt und der übrige Teil bis zu dem distalen Ende eine steigende Wölbung aufweist.

12. Vorrichtung nach einem der Ansprüche 1-11, wobei das Gemisch zum Trennen ein Flüssigkeit/Flüssigkeit-Gemisch, ein Flüssigkeit/Gas-Gemisch und/oder ein Gas/Festkörper-Gemisch ist.

13. Trennsystem zum Trennen eines Gemisches, aufweisend:
- ein Rohr (3), welches mit wenigstens einer Einlassöffnung zum Zuführen des Gemisches zum Trennen und wenigstens einer Auslassöffnung zum Abführen des getrennten Gemisches versehen ist;
- einen Strömungskörper (4), der in dem Rohr (3) angeordnet ist und entlang dessen Außenfläche das Gemisch zum Trennen gefördert werden kann;
- ein oder mehrere Wirbelblätter (5), die an der Außenfläche (11) des Strömungskörpers (4) und/oder der Innenfläche des Rohres (3) angeordnet sind, entlang welcher Blätter ein Gemisch von einem proximalen Ende zu einem distalen Ende für den Zweck des Versetzens des Gemisches in eine Drehbewegung strömt, um das Gemisch in einen relativ schweren und einen relativ leichten Anteil zu trennen, **dadurch gekennzeichnet, dass** die Orientierung des Wirbelblattes (5) im Wesentlichen schräg relativ zu der Senkrechten an der Außenfläche des Strömungskörpers (4) ist und das Wirbelblatt (5) in der Richtung radial nach außen gewölbt ist, und dass die Wölbung des Wirbelblattes (5) nach außen und/oder die Orientierung des Wirbelblattes (5) an verschiedenen Stellen zwischen dem proximalen und distalen Ende des Wirbelblattes (5) variiert.

14. Trennsystem nach Anspruch 13, aufweisend:
- eine oder mehrere Auslassöffnungen, die stromabwärts relativ zu den Wirbelblättern für den Zweck der Veranlassung eines Teils des Gemisches, seitlich aus dem Rohr heraus zu strömen, angeordnet sind;
- einen Rückführkanal, der in Axialrichtung durch die Drehmittel hindurch zum Rückführen des Teils des Gemisches, welcher über die Auslassöffnungen ausgetreten ist, in das Rohr hinein angeordnet ist.

15. Trennsystem nach Anspruch 12 und 13 mit einer Vorrichtung nach einem der Ansprüche 1-11.

## Revendications

1. Dispositif pour séparer un mélange, comprenant :
un corps d'écoulement (4) le long de la surface externe duquel le mélange à séparer peut être transporté ;
au moins une lame en spirale (5) agencée sur le corps d'écoulement (4) pour placer un mélange s'écoulant le long de celui-ci en un mouvement rotatif de l'extrémité proximale vers l'extrémité distale de celui-ci, dans le but de séparer le mélange en une fraction relativement lourde et une fraction relativement légère,
**caractérisé en ce que** l'orientation de la lame en spirale est sensiblement oblique par rapport à la normale à la surface externe (11) du corps d'écoulement (4) et la lame en spirale (5) est incurvée, dans la direction radiale vers l'extérieur, et **en ce que**
la courbure vers l'extérieur de la lame en spirale (5) et/ou l'orientation de la lame en spirale (15) varie à différentes positions entre l'extrémité proximale et l'extrémité distale de la lame en spirale (5).

2. Dispositif selon la revendication 1, dans lequel la courbure vers l'extérieur augmente de l'extrémité proximale vers l'extrémité distale de la lame en spirale (5).

3. Dispositif selon la revendication 2, dans lequel la courbure augmente uniformément sur au moins une partie de la lame en spirale.

4. Dispositif selon l'une quelconque des revendications précédentes, dans lequel l'orientation de la lame en spirale varie de l'extrémité proximale vers l'extrémité distale.

5. Dispositif selon la revendication 4, dans lequel l'orientation de la lame en spirale augmente uniformément sur au moins une partie de la lame en spirale.

6. Dispositif selon la revendication 1, dans lequel la lame en spirale s'étend sensiblement en oblique par rapport au corps d'écoulement au niveau de la position du raccordement entre la lame en spirale et le corps d'écoulement.

7. Dispositif selon la revendication 6, dans lequel l'angle (α) entre la lame en spirale et la normale à la surface du corps d'écoulement équivaut sensiblement à plus de 5° au niveau de la position du raccordement entre la lame en spirale et le corps d'écoulement.

8. Dispositif selon la revendication 1, dans lequel l'angle (α) entre la lame en spirale et la normale à la surface du corps d'écoulement est compris sensiblement entre 25° et 65° au niveau de la position du raccordement entre la lame en spirale et le corps d'écoulement.

9. Dispositif selon l'une quelconque des revendications précédentes, dans lequel l'angle (α) entre la lame en spirale et la normale à la surface du corps d'écoulement augmente progressivement vers le côté extérieur.

10. Dispositif selon l'une quelconque des revendications précédentes, dans lequel une ou plusieurs lames en spirale a(ont) une courbure axiale croissante de l'extrémité proximale vers l'extrémité distale.

11. Dispositif selon la revendication 10, dans lequel la lame en spirale s'étend sensiblement axialement sur une partie de l'extrémité proximale, et la partie restante a une courbure croissante jusqu'à l'extrémité distale.

12. Dispositif selon l'une quelconque des revendications 1 à 11, dans lequel le mélange à séparer est mélange liquide/liquide, un mélange liquide/gaz et/ou un mélange gaz/solide.

13. Système de séparation pour séparer un mélange, comprenant :
un tube (3) qui est muni d'au moins d'une ouverture d'entrée pour l'alimentation en mélange à séparer et d'au moins une ouverture de sortie pour l'évacuation du mélange séparé ;
un corps d'écoulement (4) disposé dans le tube (3), le long de la surface externe sur laquelle le mélange à séparer peut être transporté ;
une ou plusieurs lame(s) en spirale (5) agencées sur la surface externe (11) du corps d'écoulement (4) et/ou la surface interne du tube (3), le long desquelles lames un mélange s'écoule d'une extrémité proximale vers une extrémité distale dans le but de placer le mélange en un mouvement rotatif de façon à séparer le mélange en une fraction relativement lourde et une fraction relativement légère, **caractérisé en ce que** :
l'orientation de la lame en spirale (5) est sensiblement oblique par rapport à la normale de la surface externe du corps d'écoulement (4) et la lame en spirale (5) est incurvée dans une direction radiale vers l'extérieur, et **en ce que**
la courbure vers l'extérieur de la lame en spirale (5) et/ou l'orientation de la lame en spirale (5) varie à différentes positions entre l'extrémité proximale et l'extrémité distale de la lame en spirale (5).

14. Système de séparation selon la revendication 13, comprenant :
une ou plusieurs ouverture(s) d'écoulement agencée(s) en aval par rapport aux lames en spirales dans le but d'entrainer une partie du mélange à s'écouler latéralement en dehors du tube ;
un conduit de recyclage agencé en une direction axiale à travers les moyens de rotation pour retransporter à l'intérieur du tube la partie du mélange qui est sortie via les ouvertures d'écoulement.

15. Système de séparation selon les revendications 12 et 13 ayant un dispositif selon l'une quelconque des revendications 1 à 11.
